(19)

Europäisches
Patentamt
European
Patent Office
Office européen
des brevets

(11) **EP 2 720 193 A2**

(12) **EUROPEAN PATENT APPLICATION**

(43) Date of publication:
16.04.2014 Bulletin 2014/16

(21) Application number: 13181638.1

(22) Date of filing: 26.08.2013

(51) Int Cl.:
*G06T 7/00* (2006.01)          *G08G 1/00* (2006.01)
*G06T 7/20* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.09.2012 CN 201210335758**

(71) Applicant: **Ricoh Company, Ltd.**
**Tokyo 143-8555 (JP)**

(72) Inventors:
• **You, Ganmei**
**100044, Beijing (CN)**

• **Lu, Yaojie**
**100044, Beijing (CN)**
• **Shi, Zhongchao**
**100044, Beijing (CN)**
• **Wang, Gang**
**100044, Beijing (CN)**

(74) Representative: **Schwabe - Sandmair - Marx**
**Patentanwälte**
**Stuntzstraße 16**
**81677 München (DE)**

(54) **Method and system for detecting uneven road surface**

(57)     Disclosed are a method and a system for detecting an uneven road surface. The method comprises a step of adopting two depth cameras to capture a depth map, and calculating a disparity map; a step of obtaining a V-disparity map by adopting a V-disparity algorithm based on the disparity map; a step of finding an oblique line corresponding to the road surface so as to let a direction of the oblique line be a direction of the road surface; a step of calculating a projection of cross sectional surface of the road surface based on the disparity map and coordinates of disappearance points; and a step of fitting the projection of the cross sectional surface of the road surface to obtain a road line on the cross sectional surface so as to extract the road surface, and letting points located below the fitted road line be road points.

FIG.1

EP 2 720 193 A2

**Description**

BACKGROUND OF THE INVENTION

1. Field of the Invention

The present invention relates to a method and a system for detecting an uneven road surface.

2. Description of the Related Art

With the development of cities and the popularization of vehicles, the problem of traffic and transportation becomes worse and worse. In recent years, the increased rate of vehicles is far higher than that of roads and other traffic facilities. Due to the frequency of traffic accidents, the increase of casualties, and the loss of money, it is required that a vehicle should have not only good safety but also a certain amount of intelligence. In response to this kind of requirement, the concept of an intelligent vehicle has been given.

The intelligent vehicle may help a driver in the driving process so as to increase driving safety. This kind of intelligent vehicle may have a system of driver assistance. When the system of driver assistance functions, accurate road surface detection, for example, a remaining road warning, a curve warning, etc. is very useful. In a real environment, however, a road surface may be uneven; for example, there may be a slope or a hill or dale on cross sectional surface of the road surface.

U.S. Patent Application No. 2010782309A titled as "ROAD SHAPE RECOGNITION DEVICE" proposes a device for recognizing a road surface shape. However, this patent application only takes account of fitting a road surface shape along the direction of the road surface, and does not give any conclusion for a case, for example, in which a road surface itself has a hill or dale or a slope.

U.S. Patent No. 8108119B2 titled as "APPARATUS AND METHOD FOR OBJECT DETECTION AND TRACKING AND ROADWAY AWARENESS USING STEREO CAMERAS" also proposes a road surface detection method and apparatus. In this patent, a disparity value distribution along the Y-axis is utilized for finding a road surface. Since the number of points in a vehicle, having disparity values may be different from the number of points in a road surface, having disparity values, this patent is not suitable to a case in which a road surface has few points with disparity values. As a result, it is apparent that this patent only gives a method of recognizing the position of a road surface by employing disparity values, and does not give any conclusion for the road surface itself.

It is obvious that in order to accurately perform a drive assist, it is necessary to detect the basic conditions of a road surface. These kinds of important basis conditions include the direction of the road surface and the information of whether the road surface has a slope or a hill or dale. For this purpose, it is necessary to provide a road surface detection method and a device able to give not only the direction and the position of the road surface but also the conditions of the road surface itself.

SUMMARY OF THE INVENTION

In order to meet the above requirements, the present invention provides a method and a device able to detect an uneven road surface accurately and rapidly. Since the present invention may obtain a road surface by utilizing a V-disparity map and an X-Y cross sectional surface of the road surface, the method disclosed herein is suitable for being applied in a sparse view. In the present invention, the direction and the cross sectional surface of the road surface are considered. In general, in a real environment, a road surface is not absolutely flat; for example, there may be a slope or a hill or dale on the cross sectional surface of the road surface. As a result, a drive assist adopting the method disclosed herein is very helpful in respect of accurate road detection, for example, a remaining road warning, a curve warning, etc.

Since the present invention adopts a V-disparity map of a road surface, the entire contents of Chinese Patent Application No. 201110399183.0 titled as "ROAD OBJECT DETECTION METHOD AND SYSTEM", filed on Nov. 18, 2011, and whose applicant is the same with that of the present application are hereby incorporated by reference. In this application, an algorithm of V-disparity is concretely described. In particular, in a V-disparity map, V corresponds to a vertical coordinate in the disparity map coordinate system. In the domain of "V-disparity", the vertical cross sectional surface of a road surface may be described as a linear curve of line segments, and an obstacle on a vertical plane may be projected as a vertical line. As a result, an extraction of a road surface and an obstacle in a 3D disparity map may be simplified as a 2D linear extraction in a V-disparity map. By using this kind of algorithm, it is possible to recognize a front obstacle having a plane feature, for example, a pedestrian, a car, a wall, etc. In addition, this kind of algorithm is not sensitive to interference of light, shadow, etc., and is suitable for being applied to obstacle recognition of an intelligent vehicle within a complex background of a city. In particular, a V-disparity recognition process based on two lenses mainly contains a step of creating a V-disparity map; a step of extracting a road surface; and a step of extracting a vertical line representing the road surface from the V-disparity map.

According to one aspect of the present invention, a method of detecting an uneven road surface is provided. The method includes a step of adopting two depth cameras to simultaneously capture a depth map of a same scene, and calculating a disparity map of the scene based on the captured depth map; a step of obtaining a V-disparity map by adopting a V-disparity algorithm based on the disparity map; a step of detecting an oblique line corresponding to the road surface, in the V-disparity map so as to let a direction of the oblique line be in a direction of the road surface; a step of calculating a projection of cross sectional surface of the road surface based on the disparity map of the scene and coordinates of disappearance points; and a step of fitting the projection of the cross sectional surface of the road surface to obtain a road line on the cross sectional surface so as to extract the road surface, and letting points located below the fitted road line be road points.

Furthermore, in the method of detecting the uneven road surface, the step of calculating the projection of the cross sectional surface of the road surface includes a step of calculating, based on the disappearance points of the road surface, real world 3D coordinates (x', y', z') of each point in the disparity map; a step of calculating a direction of the road surface in the real world; a step of projecting the disparity map onto a Z=z0 plane along the direction of the road surface in the real world so as to obtain projected points, wherein, z0 is a constant; and a step of dividing the projection so as to obtain regions of the road surface.

Furthermore, in the method of detecting the uneven road surface, the step of calculating, based on the disappearance points of the road surface, the real world 3D coordinates (x', y', z') of each point in the disparity map includes a step of calculating the real world 3D coordinates (x', y', z') of a point (u, v, d) in the disparity map by adopting the following equations based on a given disappearance point $vp(u_{vp}, V_{vp})$.

$$x' = (u-u_{vp}) * BASE/d$$

$$y' = (v-k_v * d-b_v) * BASE/d$$

Here, BASE refers to a distance between the two cameras, u refers to a horizontal coordinate, v refers to a vertical coordinate, and d refers to a disparity value.

Furthermore, in the method of detecting the uneven road surface, the step of calculating the direction of the road surface in the real word includes a step of calculating a projection direction $k_r = (b_v-b_{hotizonal}) * f/(f * f + b_v * b_{horizonal})$, wherein, $v = K_{horizonal} * d + b_{horizonal}$ refers to a fitted horizontal plane in the V-disparity map, and f refers to a camera focal length.

Furthermore, in the method of detecting the uneven road surface, the step of projecting the disparity map onto the Z=z0 plane along the direction of the road surface in the real world includes a step of, for each point (x', y'), calculating its projected point $(x_p, y_p)$ by adopting the following equations.

$$x_p = x'$$

$$y_p = y' - k_r * (BF/d - BF/d_p)$$

$$BF = BASE * f$$

Here, $d_p$ refers to a disparity map of the Z=z0 plane.

Furthermore, in the method of detecting the uneven road surface, the step of dividing the projection so as to obtain the regions of the road surface includes a step of dividing the cross sectional surface of the road surface based on a width and a height of each separating region.

Furthermore, in the method of detecting the uneven road surface, the step of fitting the projection of the cross sectional surface of the road surface includes a step of, for each divided part of the cross sectional surface, fitting a line representing the road surface on the Z=z0 plane.

Furthermore, in the method of detecting the uneven road surface, the step of extracting the road surface includes a step of determining a point (u', v', d') in the disparity map as a point on the road surface if the point (u', v', d') in the disparity map satisfies a condition (a) that a projection of the point (u', v', d') in the V-disparity map is on the road line in the V-disparity map and a condition (b) that a projection of the point (u', v', d') on the Z=z0 plane is on the fitted road line.

According to another aspect of the present invention, a system for detecting an uneven road surface is provided. The system includes two depth cameras configured to simultaneously capture a depth map of a same scene, and to calculate a disparity map of the scene based on the depth map; a V-disparity calculator configured to obtain a V-disparity map of the scene by adopting a V-disparity algorithm based on the disparity map; a road surface direction detector configured to detect an oblique line corresponding to the road surface, in the V-disparity map so as to let a direction of the oblique line be in a direction of the road surface; cross sectional surface projection calculator configured to calculate a projection of cross sectional surface of the road surface based on the disparity map of the scene and coordinates of disappearance points; cross sectional surface processor configured to fit the projection of the cross sectional surface of the road surface; and a road surface extractor configured to extract the road surface, and to let points located below the fitted road line be road points.

Therefore, by utilizing the above method and system, it is possible to perform accurate detection on a road surface; in particular, it is possible to perform accurate detection on a sloped road surface. As a result, it is possible to carry out more accurate drive assistance.

BRIEF DESCRIPTION OF THE DRAWINGS

FIG. 1 illustrates a block diagram of a system where a method of detecting a road surface according to an embodiment of the present invention is utilized;

FIG. 2 illustrates a block diagram of cross sectional surface projection calculator;

FIG. 3 is a flowchart of a method of detecting a road surface according to an embodiment of the present invention;

FIG. 4 illustrates a hardware system;

FIG. 5 illustrates an example adopting a method of detecting a road surface according to an embodiment of the present invention;

FIG. 6 illustrates a sequence of a signal process adopting a method of detecting a road surface according to an embodiment of the present invention;

FIG. 7 illustrates a relationship between road surface direction expressions in the real world and in a V-disparity map;

FIG. 8 illustrates a V-disparity map;

FIG. 9 illustrates a process of obtaining a fitted road line by carrying out fitting;

FIG. 10 illustrates a process of converting a point in a disparity map coordinate system into a point in the real world coordinate system; and

FIG. 11 illustrates a process of obtaining cross sectional surface of a road surface in the real world coordinate system.

DETAILED DESCRIPTION OF THE PREFERRED EMBODIMENTS

The aim of the present invention is to provide a method and a system for detecting a road surface so as to contribute to driving safety.

Hereinafter, embodiments of the present invention will be concretely described with reference to the drawings. However, it should be noted that the same symbols, which are in the specification and the drawings, stand for constructional elements having the basically-same function and structure, and repeated explanations for the constructional elements are omitted.

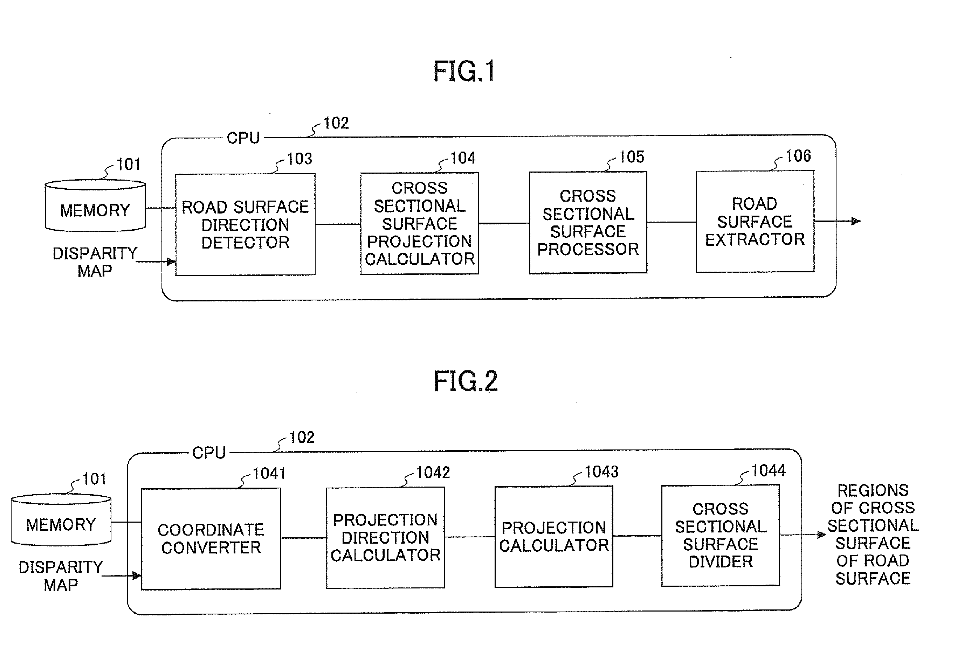

FIG. 1 illustrates a block diagram of a system where a method of detecting a road surface according to an embodiment of the present invention is utilized.

As shown in FIG. 1, a memory 101 stores disparity maps. The disparity map of each frame is read from the memory 101. In a CPU 102, a road surface direction detector 103 calculates a V-disparity map, fits road points in the V-disparity map, and outputs a road line in the V-disparity map. Cross sectional surface projection calculator 104 calculates a disparity projection on a Z=z0 plane, and outputs the projection of the cross sectional surface of a road surface. Cross sectional surface processor 105 fit the disparity projection. A road surface extractor 106 extracts the road surface on the basis of the fitted road line in the V-disparity map, fits the projection of the cross sectional surface of the road surface, and outputs the road surface.

FIG. 2 illustrates a block diagram of cross sectional surface projection calculator.

As shown in FIG. 2, the disparity map of each frame is read from the memory 101 on the basis of the direction of the road surface. In the CPU 102, a coordinate converter 1041 converts the coordinates of the disparity map from the disparity map coordinate system into the real world coordinate system, and outputs the real world coordinates of the disparity map. A projection direction calculator 1042 converts the coordinates of the direction of the road surface output from the road surface direction detector 103 from the disparity map coordinate system into the real world coordinate system so as to obtain a direction of the road surface, having the real world coordinates. A projection calculator 1043 projects, along the projection direction, the disparity map represented by the real world coordinates onto a Z=z0 plane, and outputs the projection having the real world coordinates. Cross sectional surface divider 1044 divides the projection on the basis of width and height, and outputs regions of the cross sectional surface of the road surface.

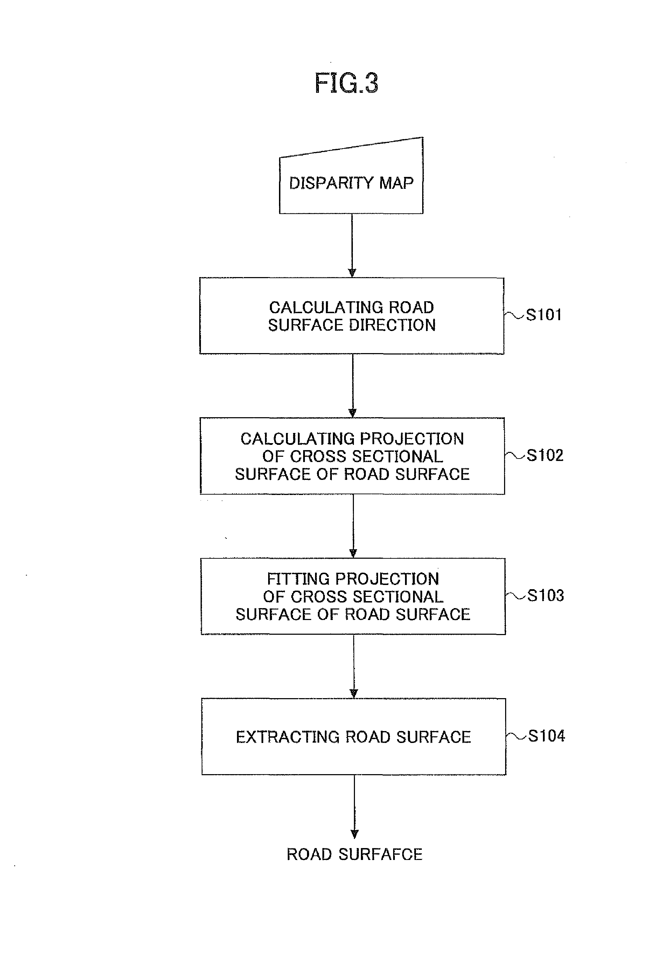

FIG. 3 is a flowchart of a method of detecting an uneven road surface according to an embodiment of the present invention.

As shown in FIG. 3, first a disparity map is input so as to calculate the direction of a road surface (S101), and a projection of the cross sectional surface of the road surface is calculated (S102) so as to obtain the projection of the road surface in the real world. The projection of the cross sectional surface of the road surface is fitted so as to obtain a road line of the cross sectional surface (S103). Finally the road surface is extracted (S104). The step of calculating the direction of the road surface (S101) is performed in the road surface direction detector 103. The step of calculating the projection of the cross sectional surface of the road surface (S102) is performed in the cross sectional surface projection calculator 104. The step of fitting the projection of the cross sectional surface of the road surface (S103) is performed in the cross sectional surface processor 105. The step of extracting the road surface (S104) is performed in the road surface extractor 106.

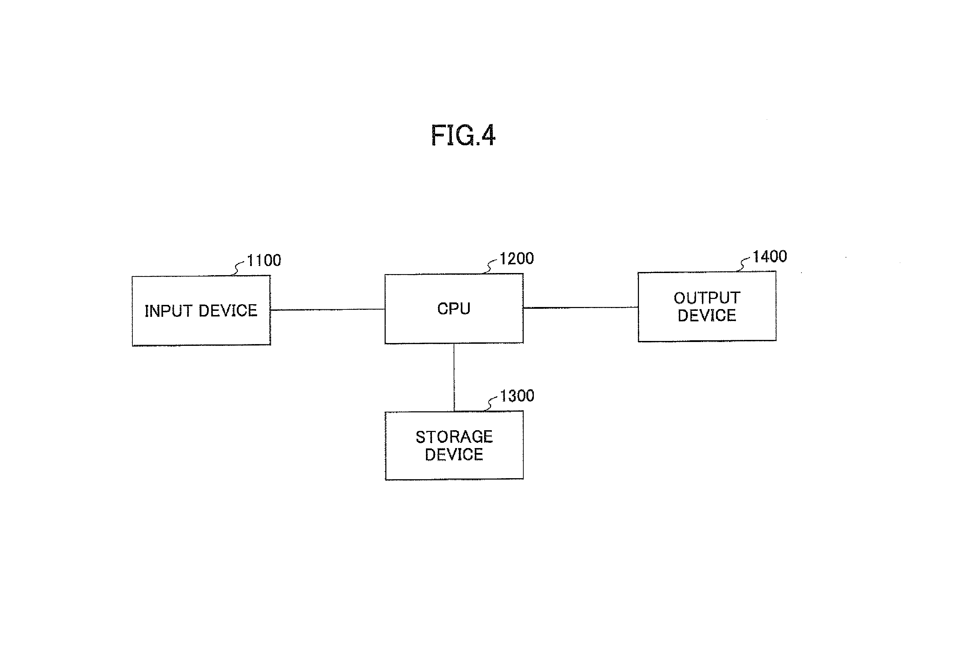

FIG. 4 illustrates a hardware system.

As shown in FIG. 4, an input device 1100 is configured to input the disparity map of each frame. A CPU 1200 is configured to accomplish road surface detection. The input data and the intermediate results are stored in a storage device 1300. Finally an output device 1400 outputs a final road surface.

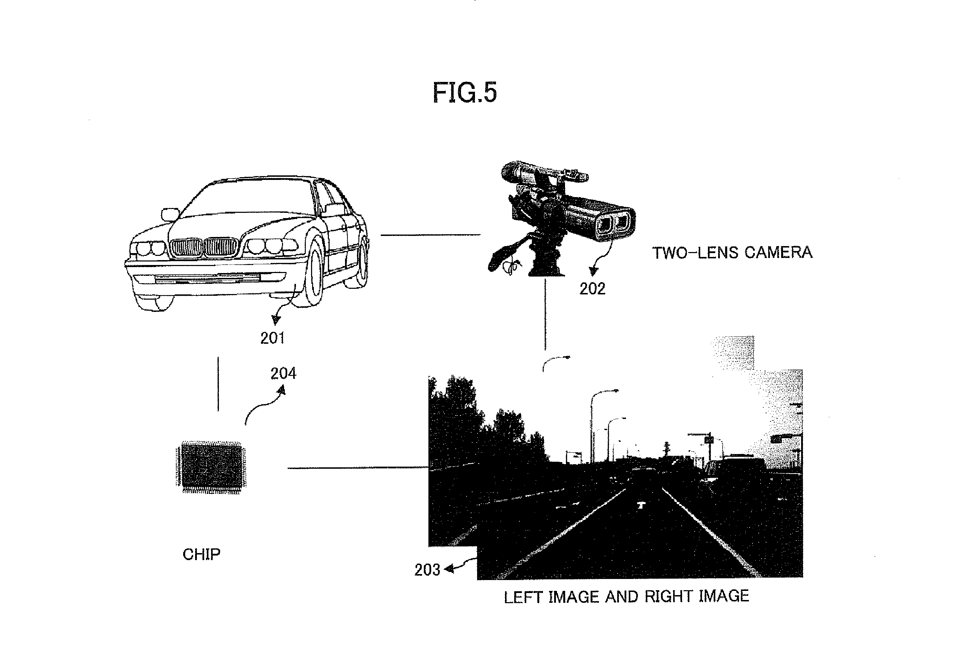

FIG. 5 illustrates an example adopting a method of detecting a road surface according to an embodiment of the present invention.

As shown in FIG. 5, there is a vehicle 201 in which a two-lens camera 202 is installed. The two-lens camera 202 captures a left lens based image and a right lens based image (203). A chip 204 processes the images so as to extract an object.

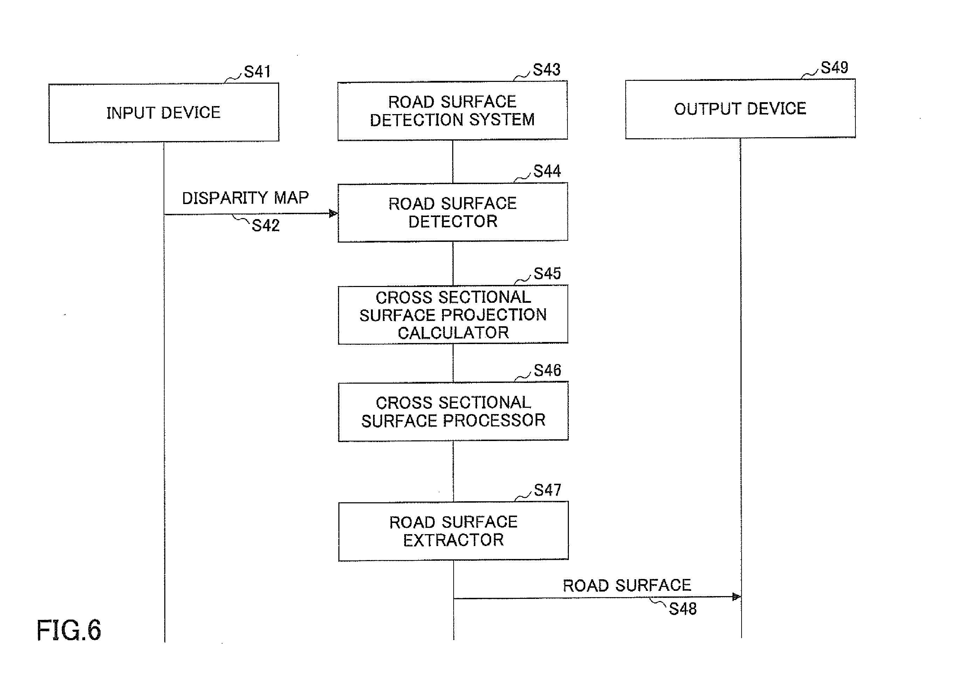

FIG. 6 illustrated a sequence of a signal process adopting a method of detecting a road surface according to an embodiment of the present invention.

As shown in FIG. 6, an input device (S41) inputs a disparity map (S42) into a road surface detection system (S43). In (S43), a road surface direction detector (S44) obtains the direction of a road surface, and by using cross sectional surface projection calculator (S45), the projection of the cross sectional surface of the road surface in the real world is calculated; then division of the cross sectional surface of the road surface is accomplished. Cross sectional surface processor (S46) fits the division of the cross sectional surface of the road surface. A road surface extractor (S47) extracts the road surface on the basis of the direction of the road surface and the fit of the cross sectional surface of the road (S48). Finally the road surface (S48) is output to an output device (S49).

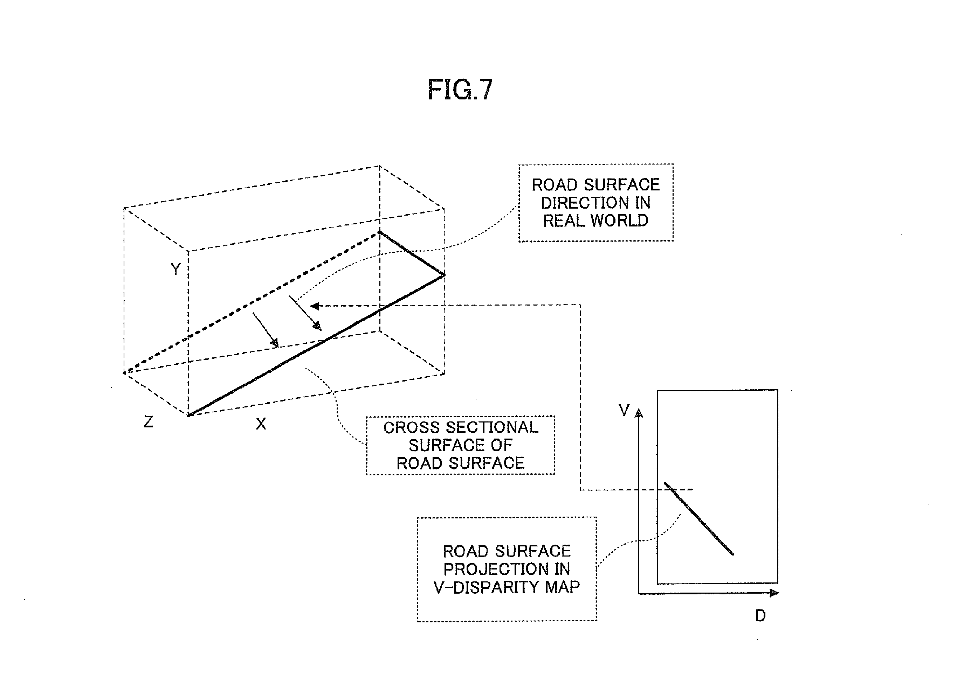

FIGS. 7 to 11 illustrate a specific example of an embodiment of the present invention.

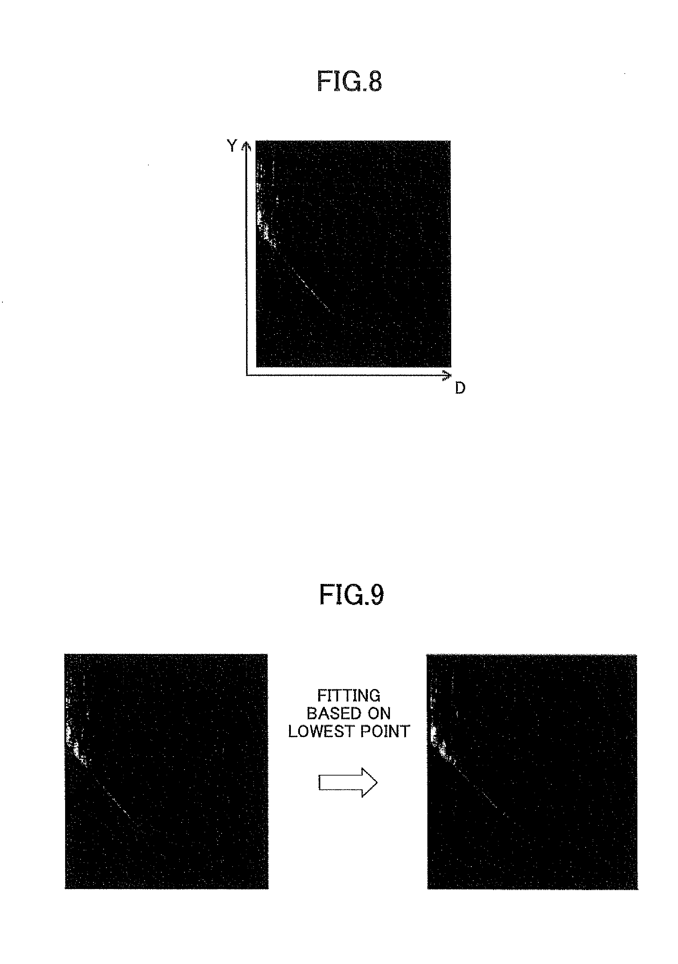

FIG. 7 illustrates a relationship between road surface direction expressions in the real world and in a V-disparity map. In this example, a road surface is detected from a disparity map generated on the basis of a left image and a right image captured by a two-lens camera. The direction of the road surface is calculated so as to obtain a direction of the road surface in the real world (S101) in FIG. 3. As shown in FIG. 7, the road surface direction expression in the real world and the road surface direction expression in a V-disparity map are the same line. First, on the basis of the disparity map, a V-disparity map of a scene is calculated. FIG. 8 illustrates the calculated V-disparity map. FIG. 9 illustrates a process of obtaining a fitted road line by carrying out fitting.

As shown in FIG. 9, by carrying out a fitting process based on the lowest point, a road line in the V-disparity map is obtained. In particular, first the lowest point in the V-disparity map is selected, and at least one line is obtained by using the Hough transform. Then an obtained line on which the number of points is maximum is selected. In FIG.9, the oblique line (Lv: $v=k_v*d+b_v$) in the right image is the road line.

Then the direction of the road surface in the real world is calculated. The calculation may be on the basis of a method disclosed in Z. Hu, F. Lamosa, and K. Uchimura, "A Complete U-V-Disparity Study for Stereovision Based 3d Driving Environment Analysis" (In Proceedings of the Fifth International Conference on 3-D Digital Imaging and Modeling (3DIM05), pages 204 - 211, 2005). By utilizing this method, the following equation may be obtained.

$$kr = (b_v - b_{horizonal}) * f / (f*f + b_v * b_{horizonal})$$

Here kr refers to the direction of the road surface in the real world. A road line in a disparity map, corresponding to a horizontal road is $L_{horizonal}$: $v=k_{horizaonal}*d+b_{horizonal}$. f refers to a camera focal length.

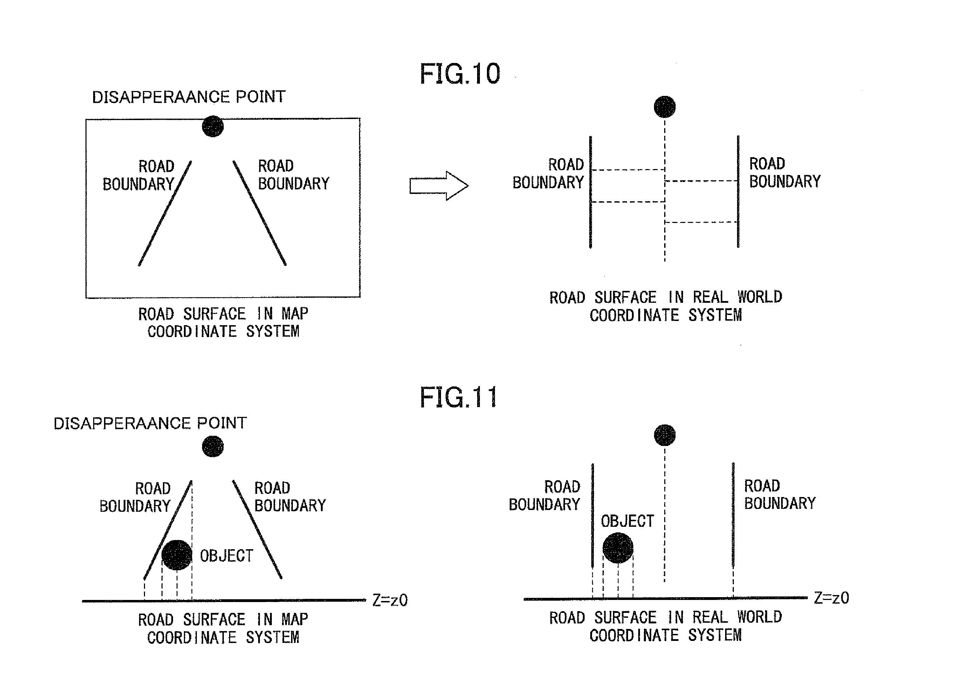

FIG. 10 illustrates a process of converting a point in a disparity map coordinate system into a point in the real world coordinate system. A projection of cross sectional surface of a road surface is calculated as shown in FIG. 10. First, on the basis of a disappearance point $vp(u_{vp}, v_{vp})$, the coordinates in the real world of a point in a disparity map is calculated. FIG. 11 illustrates a process of obtaining cross sectional surface of a road surface in the real world coordinate system. As shown in FIG. 11, projection is carried out in the real world coordinate system. By carrying out this kind of projection in the real world coordinate system, it is possible to avoid the overlapping of a road white line and an object. The process is as follows.

$$x' = (u-u_{vp})*BASE/d$$

$$y' = (v-k_v*d-b_v)*BASE/d$$

Here, BASE refers to a distance between two cameras, and d refers to a disparity value. x' and y' refer to real distances to the disappearance point vp.

In the real world coordinate system, points in the disparity map is projected onto a Z=z0 plane along the direction of the road surface. Here z0 is a predetermined value. The projection along the direction of the road surface may guarantee that the relative position of the road surface and an object thereon remain unchanged.

As for a point (x', y'), if its projected point is $(x_p, y_p)$, then $x_p=x'$, $y_p=y'-kr*(BF/d-BF/d_p)$. Here BF=BASE*f, and $d_p$ is a disparity value corresponding to the Z=z0 plane.

Next, on the projection of the cross sectional surface, the cross sectional surface of the road surface is divided so as to obtain regions of the road surface. In particular, on the projection of the cross sectional surface, the road surface regions are obtained on the basis of height and width. The reason is that the height of a road is lower than that of an obstacle, and the width of the road is different from that of an obstacle (for example, a car or a person) in general. After the road surface is extracted, cross sectional surface line of the road surface is fitted in each road surface region.

Next cross sectional surface projection of the road surface is fitted so as to obtain a road line on the cross sectional surface. A curve equation, i.e., y = a*x^3+b*x^2+c*x+d is utilized for carrying out the fitting. By carrying out the fitting, it is possible to obtain a real road surface without noise.

Finally all points below the fitted road line serve as road points. In the divided regions of the road surface, all points satisfying y < a*x^3+b*x^2+c*x+d are extracted to serve as the road points.

The above described method may be executed in a computer (a processor), or may be distributedly executed by plural computers. In addition, a program which may cause a computer to carry out the above method may be transferred to a remote computer in which the program will be executed.

While the present invention is described with reference to the specific embodiments chosen for purpose of illustration, it should be apparent that the present invention is not limited to these embodiments, but numerous modifications could be made thereto by those people skilled in the art without departing from the basic concept and technical scope of the present invention.

The present application is based on and claims the benefit of priority of Chinese Priority Patent Application No. 201210335758.1 filed on Sep. 11, 2012, the entire contents of which are hereby incorporated by reference.

## Claims

1. A method of detecting an uneven road surface, comprising:

   a step of adopting two depth cameras to simultaneously capture a depth map of a same scene, and calculating a disparity map of the scene based on the depth map;
   a step of obtaining a V-disparity map of the scene by adopting a V-disparity algorithm based on the disparity map;
   a step of finding an oblique line corresponding to the road surface in the V-disparity map, so as to let a direction of the oblique line be a direction of the road surface;
   a step of calculating a projection of cross sectional surface of the road surface based on the disparity map of the scene and coordinates of disappearance points; and
   a step of fitting the projection of the cross sectional surface of the road surface to obtain a road line on the cross sectional surface so as to extract the road surface, and letting points located below the fitted road line be road points.

2. The method according to claim 1, wherein, the step of calculating the projection of the cross sectional surface of the road surface includes:

a step of calculating, based on the disappearance points of the road surface, real world 3D coordinates (x', y', z') of each point in the disparity map;
a step of calculating a direction of the road surface in the real world;
a step of projecting the disparity map onto a Z=z0 plane along the direction of the road surface in the real world so as to obtain projected points, wherein, z0 is a constant; and
a step of dividing the projection so as to obtain regions of the road surface.

3. The method according to claim 2, wherein, the step of calculating, based on the disappearance points of the road surface, the real world 3D coordinates (x', y', z') of each point in the disparity map includes:

a step of calculating, based on a given disappearance point $vp(u_{vp}, V_{vp})$, the real world 3D coordinates (x', y', z') of a point (u, v, d) in the disparity map by adopting

$$x' = (u-u_{vp})*BASE/d;$$

and

$$y' = (v-k_v*d-b_v)*BASE/d,$$

wherein, BASE refers to a distance between the two cameras, u refers to a horizontal coordinate, v refers to a vertical coordinate, and d refers to a disparity value.

4. The method according to claim 2, wherein, the step of calculating the direction of the road surface in the real world includes:

a step of calculating a projection direction $k_r = (b_v-b_{hotizonal})*f/(f*f+b_v*b_{horizonal})$, wherein, $v = k_{horizonal}*d+b_{horizonal}$ refers to a fitted horizontal plane in the V-disparity map, and f refers to a camera focal length.

5. The method according to claim 2, wherein, the step of projecting the disparity map onto the Z=z0 plane along the direction of the road surface in the real world includes:

a step of, for each point (x', y'), calculating its projected point $(x_p, y_p)$ by adopting

$$x_p = x';$$

$$y_p = y'-k_r*(BF/d-BF/d_p);$$

and

$$BF = BASE*f,$$

wherein, $d_p$ refers to a disparity map of the Z=z0 plane.

**6.** The method according to claim 2, wherein, the step of dividing the projection so as to obtain the regions of the road surface includes:

a step of dividing the cross sectional surface of the road surface based on a width and a height of each separating region.

**7.** The method according to claim 1, wherein, the step of fitting the projection of the cross sectional surface of the road surface includes:

a step of, for each divided region of the cross sectional surface, fitting a line representing the road surface on the Z=z0 plane.

**8.** The method according to claim 1, wherein, the step of extracting the road surface includes:

a step of determining a point (u', v', d') in the disparity map as a point on the road surface if the point (u', v', d') in the disparity map satisfies a condition (a) that a projection of the point (u', v', d') in the V-disparity map is on the road line in the V-disparity map and a condition (b) that a projection of the point (u', v', d') on the Z=z0 plane is on the fitted road line.

**9.** A system for detecting an uneven road surface, comprising:

two depth cameras configured to simultaneously capture a depth map of a same scene, and to calculate a disparity map of the scene based on the depth map;
a V-disparity calculator configured to obtain a V-disparity map of the scene by adopting a V-disparity algorithm based on the disparity map;
a road surface direction detector configured to detect an oblique line corresponding to the road surface, in the V-disparity map so as to let a direction of the oblique line be a direction of the road surface;
cross sectional surface projection calculator configured to calculate a projection of cross sectional surface of the road surface based on the disparity map of the scene and coordinates of disappearance points;
cross sectional surface processor configured to fit the projection of the cross sectional surface of the road surface; and
a road surface extractor configured to extract the road surface, and to let points located below the fitted road line be road points.

## FIG.1

CPU ⟋102

MEMORY ⟋101

DISPARITY MAP

| ROAD SURFACE DIRECTION DETECTOR ⟋103 | CROSS SECTIONAL SURFACE PROJECTION CALCULATOR ⟋104 | CROSS SECTIONAL SURFACE PROCESSOR ⟋105 | ROAD SURFACE EXTRACTOR ⟋106 |

## FIG.2

CPU ⟋102

MEMORY ⟋101

DISPARITY MAP

| COORDINATE CONVERTER ⟋1041 | PROJECTION DIRECTION CALCULATOR ⟋1042 | PROJECTION CALCULATOR ⟋1043 | CROSS SECTIONAL SURFACE DIVIDER ⟋1044 |

REGIONS OF CROSS SECTIONAL SURFACE OF ROAD SURFACE

EP 2 720 193 A2

# FIG.3

DISPARITY MAP

↓

| CALCULATING ROAD SURFACE DIRECTION | ∿S101 |

↓

| CALCULATING PROJECTION OF CROSS SECTIONAL SURFACE OF ROAD SURFACE | ∿S102 |

↓

| FITTING PROJECTION OF CROSS SECTIONAL SURFACE OF ROAD SURFACE | ∿S103 |

↓

| EXTRACTING ROAD SURFACE | ∿S104 |

↓

ROAD SURFAFCE

# FIG.4

```
┌──────────────┐        ┌──────────┐        ┌──────────────┐
│              │  1100  │          │  1200  │              │  1400
│ INPUT DEVICE │────────│   CPU    │────────│   OUTPUT     │
│              │        │          │        │   DEVICE     │
└──────────────┘        └────┬─────┘        └──────────────┘
                             │
                             │  1300
                        ┌────┴─────┐
                        │ STORAGE  │
                        │  DEVICE  │
                        └──────────┘
```

EP 2 720 193 A2

FIG.5

TWO-LENS CAMERA

202

201

204

203

LEFT IMAGE AND RIGHT IMAGE

CHIP

EP 2 720 193 A2

S41

INPUT DEVICE

S43

ROAD SURFACE
DETECTION SYSTEM

S49

OUTPUT DEVICE

DISPARITY MAP

S42

S44

ROAD SURFACE
DETECTOR

S45

CROSS SECTIONAL
SURFACE PROJECTION
CALCULATOR

S46

CROSS SECTIONAL
SURFACE PROCESSOR

S47

ROAD SURFACE
EXTRACTOR

ROAD SURFACE

S48

FIG.6

# FIG.7

ROAD SURFACE DIRECTION IN REAL WORLD

CROSS SECTIONAL SURFACE OF ROAD SURFACE

ROAD SURFACE PROJECTION IN V-DISPARITY MAP

# FIG.8

# FIG.9

FITTING
BASED ON
LOWEST POINT

## FIG.10

DISAPPERAANCE POINT

ROAD BOUNDARY / ROAD BOUNDARY

ROAD SURFACE IN MAP COORDINATE SYSTEM

$\Rightarrow$

ROAD BOUNDARY

ROAD BOUNDARY

ROAD SURFACE IN REAL WORLD COORDINATE SYSTEM

## FIG.11

DISAPPERAANCE POINT

ROAD BOUNDARY / ROAD BOUNDARY

OBJECT

Z=z0

ROAD SURFACE IN MAP COORDINATE SYSTEM

ROAD BOUNDARY

OBJECT

ROAD BOUNDARY

Z=z0

ROAD SURFACE IN REAL WORLD COORDINATE SYSTEM

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010782309 A
- US 8108119 B2
- CN 201110399183
- CN 201210335758

**Non-patent literature cited in the description**

- **Z. HU ; F. LAMOSA ; K. UCHIMURA.** A Complete U-V-Disparity Study for Stereovision Based 3d Driving Environment Analysis. *Proceedings of the Fifth International Conference on 3-D Digital Imaging and Modeling (3DIM05),* 2005, 204-211